# EUROPEAN PATENT SPECIFICATION

(11) **EP 4 637 345 B1**
(45) Date of publication and mention of the grant of the patent: **18.11.2026**
(21) Application number: 23821911.7
(22) Date of filing: 05.12.2023
(51) Int. Cl.: A01M 23/00, H04L 45/48, H04W 84/18, H04L 45/12, H04W 40/02, H04W 72/0446

(54) **A PEST CONTROL SYSTEM AND A METHOD FOR BUILDING A NETWORK OF PEST CONTROL DEVICES**
SCHÄDLINGSBEKÄMPFUNGSSYSTEM UND VERFAHREN ZUR HERSTELLUNG EINES NETZWERKS AUS SCHÄDLINGSBEKÄMPFUNGSVORRICHTUNGEN
SYSTÈME DE LUTTE CONTRE LES NUISIBLES ET PROCÉDÉ PERMETTANT DE CONSTRUIRE UN RÉSEAU DE DISPOSITIFS DE LUTTE CONTRE LES NUISIBLES

(30) Priority: 23.12.2022 DK PA202270651
(43) Date of publication of application: 29.10.2025
(73) Proprietor: Anticimex Innovation Center A/S, 3200 Helsinge (DK)
(72) Inventor: HOHNEN, Peter, 3080 Tikøb (DK); SKOU, Rasmus, 2980 Kokkedal (DK); OLSSON, Tomas, 211 28 Malmö (SE)
(74) Representative: Zacco Denmark A/S
(86) International application number: PCT/EP2023/084326
(87) International publication number: WO 2024/132507

(56) References cited:
- EP-B1- 2 323 478
- WO-A1-2020/243518
- US-A1- 2009 322 518

## Description

### Technical field

The present disclosure relates to a pest control system, a method for building a network of pest control devices, a data protocol for operating the network and a method of controlling the signal strength of a pest control network. More specifically, the disclosure relates to a pest control system, a method for building a network of pest control devices, a data protocol for operating the network and a method of controlling the signal strength of a pest control network as defined in the introductory parts of the independent claims.

### Background art

In most cities in the world, rodents, in particular rats, are a problem. Even though pest control has developed during the last decades, severe damages are still today caused by rodents. The damages are not only direct damages, e.g. food being eaten by rodents, but also indirect damages. An example of indirect damages is that restaurants where rats or other rodents have been found need to close down their business due to non-compliance with food safety regulations. Having reliable and efficient pest control is thus important from a wide range of aspects.

Insects may also cause problems. Problems associated with insects range from being a nuisance to actually causing tangible damages, for instance, by spreading diseases, ruining food or crops, destroying clothes, furniture, or even building materials. As a result property, buildings or other living spaces may become uninhabitable. To date, there has especially been a need for developing pest control for mosquitoes, cockroaches and flies, but the increased globalization leads to higher risk of global spreading of harmful insects.

New and improved methods for pest control are consequently being developed on an ongoing basis, a great deal of which is based on insecticides, pesticides, while other methods use actual traps, containing mechanical and/or electric means for pest control. The wording pests should be interpreted broadly to comprises e.g. rats, mice, ferrets, mink, and moles and rodents in general as well as insects.

During the last few years, digitally connected pest control devices have become increasingly popular. For instance, the SMART solutions developed and marketed by Anticimex^{™} is one example well-known in the industry of pest control. By having traps and sensors connected to the Internet, continuous monitoring of these are made possible. This has the advantage that the need for manually checking the traps is reduced or in some cases completely removed. In addition, the traps may be provided with dual sensors, a first sensor for detecting that the trap has snapped, and a second sensor for detecting if a rodent is placed in the trap or not. With such set-up it is further made possible to distinguish between true positives, i.e. the trap has snapped and a rodent is present, and false positives, i.e. the trap has snapped, but no rodent is present. Still an advantage with the connected traps and sensors is that the use of biocides can be reduced or in some cases totally avoided.

Even though modern pest control offers sensors and traps enabling remote monitoring, there is still room for improvement. It is important that the network connected pest control devices are reliable so that animals or insects that are trapped can be removed. Especially is an animal is wounded in a trap it is for animal welfare reasons important that the system notifies the owner so that the situation can be quickly resolved. Manual intervention is, however, expensive. It is therefore especially important that the system function as expected. It is thereby a need for reliable pest control systems that report all detected animals or insects quickly.

Pest control devices are more and more commonly driven by batteries. It is for animal welfare reasons important that animals are not trapped in a trap that is powerless due to an empty battery. Exchanging batteries is expensive as it requires service personnel accessing each device. It is thereby desired that battery driven devices can run for a long time without the need for battery replacement. The type of network design used for the pest control network will affect how much information the devices will send in the network thereby affecting the battery life of battery driven devices. There is thus a need in the industry for improved network structures reducing the power consumption of the devices in the pest control system.

Lately mesh networks have been used for pest control systems. Mesh networks do, however, communicate a lot between the nodes in the network and thereby require the devices to send a lot of data. There is thus a need in the industry for improved network structures for pest control systems.

US 2009/322518 A1 (LIANG CHIEH-JAN MIKE [US] ET AL) 31 December 2009, presents a wireless sensor network. It deals with the formation of the routing tree.

EP 2 323 478 B1 (DOW AGROSCIENCES LLC [US]) 29 March 2017 presents a pest control system with rodent traps. The traps form a network.

WO 2020/243518 A1 (LANDIS & GYR INNOVATIONS INC [US]) 3 December 2020 deals with a mesh network and the routing tree formation.

### Summary

The invention is defined by the independent claim. Dependent claims define preferred embodiments.

It is an object of the present disclosure to mitigate, alleviate or eliminate one or more of the above-identified deficiencies and disadvantages in the prior art and solve at least the above mentioned problem. According to a first aspect there is provided a pest control system comprising a gateway comprising a gateway memory, a wireless communication unit, and an external network communication unit. The pest control system comprises a number of top tree nodes wherein each top tree node has the gateway as a sole parent. Each top tree node comprises a node memory and at least one wireless data communication unit. The pest control system further comprises a number of tree nodes, wherein each tree node belongs to one sole tree and has one sole parent, wherein each tree node comprises a node memory and at least one data wireless communication unit. Each tree further has a dedicated slot time during a repeat cycle to avoid interference between different trees. According to some embodiments, each top tree node and each tree node is a trap device for an animal, a monitoring device, or both a trap and a monitoring device. According to some embodiments, the nodes and/or the gateway are/is comprises a battery as power source.

The wireless communication unit is used for the nodes of the pest control system to communicate while the external network communication unit is used to communicate with a backend server or a portable device for controlling and monitoring the pest control system. The gateway may, however, also be connected with a wire to an external network for communication with the backend server or a portable electronic device.

The network structure is utilizing both the benefits of a centralized network and a mesh network. Communication from the gateway to the top tree nodes is very quick as it is a direct communication. Devices not in range of the gateway communicate with the gateway by relaying data through one or several nodes. Different trees do not communicate with each other, which will save data traffic and reduce the energy consumption of the nodes. The battery of battery driven trap devices and monitoring devices will thereby last longer and the risk for animals suffering in powerless traps will decrease. Intervals between battery exchange will also be longer reducing costs for managing the pest control system.

According to some embodiments, each top tree node and each tree node is arranged to communicate whether or not an animal is trapped and/or registered by the node so that a user can monitor the pest control around the clock or 24/7.

According to some embodiments, each top tree node and each tree node is a range extender. Every node will extend the network so as to make a tree of the network longer. A new trap device or monitor device thereby only has to be in range of any node in the pest control system making placement of devices easier.

According to some embodiments, each top tree node and each tree node comprises an address to its parent and a sub node database with addresses to all its direct children saved in the node memory. The nodes of the pest control system are thereby able to communicate with the closest nodes of the system, but not with other trees in the system. Communication in the system is thereby reduced which will reduce the energy consumption of the nodes. The battery of battery driven trap devices and monitoring devices will thereby last longer and the risk for animals suffering in powerless traps will decrease. Intervals between battery exchange will also be longer reducing costs for managing the pest control system.

According to some embodiments, the nodes in the pest control system are arranged in as small trees as possible and as many trees as possible. If all devices are in range of the gateway every device will be a top tree node and alone in its tree. Only if a device is not in range of the gateway, a tree will be extended with tree nodes. Communication paths will thereby be reduced to a minimum which will reduce the energy consumption of the nodes. The battery of battery driven trap devices and monitoring devices will thereby last longer and the risk for animals suffering in powerless traps will decrease. Intervals between battery exchange will also be longer reducing costs for managing the pest control system.

According to some embodiments, the gateway is arranged to communicate with a backend server so that the pest control system can be managed and monitored on distance by accessing the backend server, e.g. from an network connected computing device as a laptop or a smartphone.

According to some embodiments, all network traffic is encrypted to ensure integrity of the system and make the system harder to tamper with for anyone unauthorized. The system is thereby more reliable and less sensitive for disturbance from other equipment. This will reduce the risk for malfunction and thereby reduce the risk of an animal being trapped without the system reporting it. A safer system is also obtained. Problems associated with a third party intervening or eavesdropping are reduced.

According to a second aspect there a method is provided for building a network of pest control devices, the method comprising arranging a gateway, and a plurality of trap devices and monitoring devices in an area for pest control purposes, wherein the gateway and each trap device and monitoring device comprises a memory with a sub node database and wherein the gateway and each trap device and monitoring device are turned on; sending a pairing signal from the gateway at a rendezvous frequency; at each trap device or monitoring device that is receiving the pairing signal: assigning the trap device or monitoring device as top tree node in a tree, storing the assignments in the sub node database of the gateway, and storing the address of the gateway in the memory of the assigned trap device or monitoring device; at the gateway, broadcasting on the rendezvous frequency to the top tree nodes a network communication frequency; at the gateway, broadcasting on the network communication frequency to the top tree nodes individual dedicated slot times during a repeat cycle to avoid interference between them; and repeating until no additional trap device or monitoring device is responding and is added to the network: at each trap device or monitoring device with an empty sub node database, sending at the rendezvous frequency the pairing signal during the dedicated slot time of the tree; at each trap device or monitoring device that is receiving the pairing signal and that does not have a stored parent address stored: receiving on the rendezvous frequency information about frequency of the network communication frequency; receiving at the network communication frequency tree individual dedicated slot times during a repeat cycle; assigning the trap device or monitoring device as tree node in the tree of the top tree node; storing the network address of the trap device or monitoring device sending the pairing signal as parent address; assigning a node network address to the trap device or monitoring device; communicating on the network communication frequency the assigned node network address to the tree.

Accordingly a network of pest control devices is built with as small trees as possible and as many trees as possible. If all devices are in range of the gateway every device will be a top tree node and alone in its tree. Only if a device is not in range of the gateway, a tree will be extended with tree nodes. Communication paths will thereby be reduced to a minimum which will reduce the energy consumption of the nodes. The battery of battery driven trap devices and monitoring devices will thereby last longer and the risk for animals suffering in powerless traps will decrease. Intervals between battery exchange will also be longer reducing costs for managing the pest control system.

According to some embodiments, the network address is indicative of which tree it belongs to and what tree level it is located at. If a node is not responding for some reason it is thereby easy to establish the implications for the network.

The data protocol sends the bare minimum that is required for the network protocol to function. The data amount communicated in the system is thereby reduced which will reduce the energy consumption of the nodes. The battery of battery driven trap devices and monitoring devices will thereby last longer and the risk for animals suffering in powerless traps will decrease. Intervals between battery exchange will also be longer reducing costs for managing the pest control system.

According to some embodiments, the method comprises: at the gateway: detecting that one or a plurality of node in the network is not responding; adding the identity of any missing nodes to a lost node list; repeating for each node in the lost node list: iterating through the network level by level away from the top tree node level until the currently searched node is found: sending at the network communication frequency a pairing signal during the trees dedicated slot time; if receiving a response assigning the trap device or monitoring device a new network address and removing the trap device or monitoring device from the lost node list. A broken device or a device that for some reason does not access its parent node will thereby be handled by setting up the part of the network no longer connected again. Sub-nodes to the broken node may thereby be connected to a different tree instead if within range of any node in the network. This will produce a very resilient network that repairs itself automatically as much as is possible if problems arise. It will in turn reduce the risk of animals being trapped in a trap device that is not connected to the network reducing the risk for animals suffering undetected.

According to some embodiments, the method comprises setting the gateway in a battery mode in which the gateway enters a sleep mode when not required to communicate according to repeat cycle schedules. In case of power failure, the network will thereby keep working for a long time. This will produce an even more resilient network with reduced risk of malfunction.

According to a third aspect there is provided a method of controlling the signal strength of a pest control network according to the first aspect, comprising setting the signal strength of the gateway and all trap devices or monitoring devices of the pest control network to a first signal strength when arranging a new trap device or monitoring device at the location for pest control, wherein a new trap device or monitoring device is placed so as to receive a signal from the network; setting the signal strength of the gateway and all trap devices or monitoring devices of the pest control network to a second signal strength, stronger than the first signal strength, when building the network in accordance with the second aspect; setting the signal strength of the gateway and all trap devices or monitoring devices of the pest control network to a third signal strength, stronger than the second signal strength, when operating the pest control network for pest control. This will produce a more robust network with reduced risk of malfunction due to lost data packets. It will in turn reduce the risk of animals being trapped in a trap device that is not connected to the network reducing the risk for animals suffering undetected.

Effects and features of the second through third aspects are to a large extent analogous to those described above in connection with the first aspect. Embodiments mentioned in relation to the first aspect are largely compatible with the second through third aspects.

The present disclosure will become apparent from the detailed description given below. The detailed description and specific examples disclose preferred embodiments of the disclosure by way of illustration only. Those skilled in the art understand from guidance in the detailed description that changes and modifications may be made within the scope of the disclosure.

Hence, it is to be understood that the herein disclosed disclosure is not limited to the particular component parts of the device described or steps of the methods described since such device and method may vary. It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

### Brief descriptions of the drawings

The above objects, as well as additional objects, features and advantages of the present disclosure, will be more fully appreciated by reference to the following illustrative and non-limiting detailed description of example embodiments of the present disclosure, when taken in conjunction with the accompanying drawings.
Figure 1 illustrates a pest control system according to an embodiment of the present disclosure.
Figure 2 shows a representation of a gateway of the pest control system shown in Figure 1.
Figure 3 shows a representation of a monitoring device of the pest control system shown in Figure 1.
Figure 4a shows a representation of a trap device of the pest control system shown in Figure 1 in an open state.
Figure 4b shows the trap device of Figure 4a in an closed state with a trapped animal.
Figure 5 is a block diagram illustrating a sub node data base of the gateway.
Figure 6 is a block diagram illustrating a lost node list.
Figure 7 is a flow chart disclosing a method according an embodiment according to the second aspect of the present disclosure.
Figure 8 is a flow chart disclosing a method according an embodiment according to the third aspect of the present disclosure.

### Detailed description

The present disclosure will now be described with reference to the accompanying drawings, in which preferred example embodiments of the disclosure are shown. The disclosure may, however, be embodied in other forms and should not be construed as limited to the herein disclosed embodiments. The disclosed embodiments are provided to fully convey the scope of the disclosure to the skilled person.

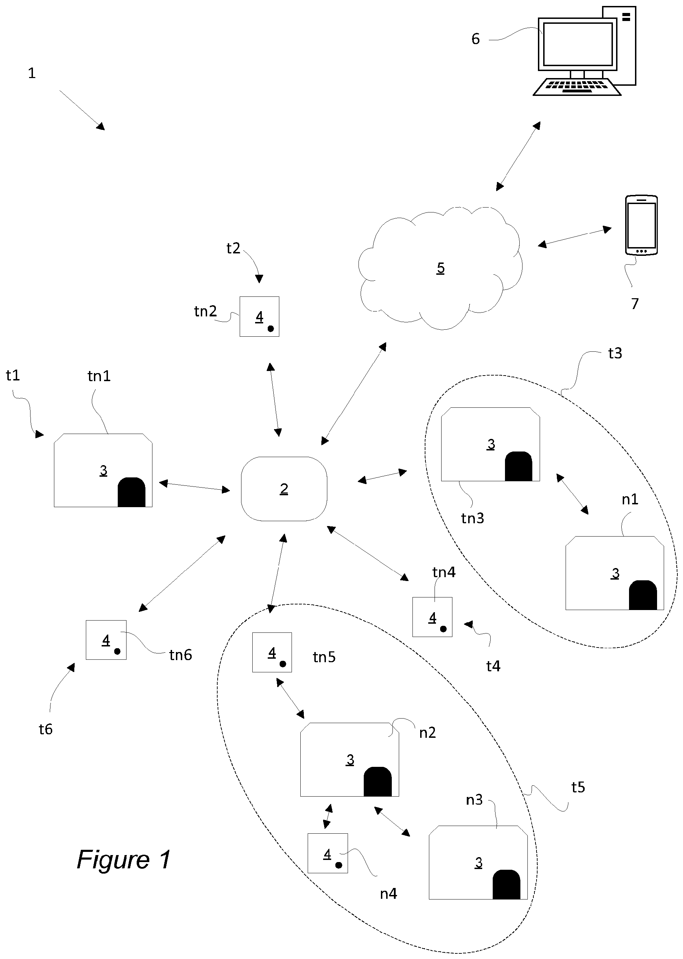

With reference to Figures 1, 2, 3 4a and 4b an embodiment of a pest control system 1 according to the first aspect of this disclosure is shown comprising a gateway 2 comprising a gateway memory 21, a wireless communication unit 22, and an external network communication unit 23. Figure 1 shows a number of top tree nodes tn1-tn6 wherein each top tree node has the gateway 2 as a sole parent. Each top tree node tn1-tn6 comprises a node memory nm and at least one wireless data communication unit nc. Figure 1 further shows a number of tree nodes n1,n2,n3,n4, wherein each tree node belongs to one sole tree t1-t6 and has one sole parent, wherein each tree node n1,n2,n3,n4 comprises a node memory nm and at least one data wireless communication unit nc; wherein each tree t1-t6 has a dedicated slot time during a repeat cycle to avoid interference between different trees.

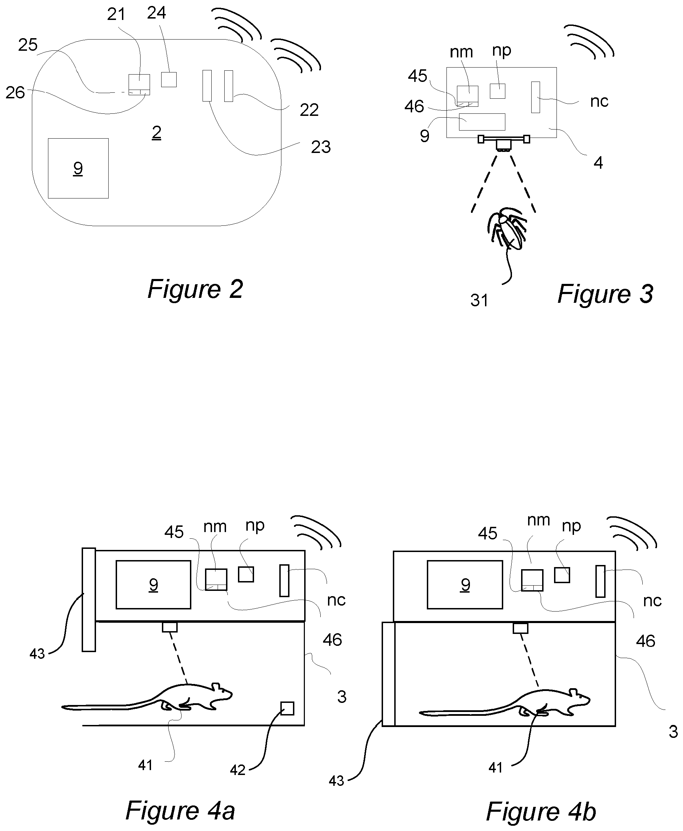

As disclosed in Figure 1 each top tree node tn1-tn6 and each tree node is a trap device 3 for an animal, a monitoring device 4, or both a trap and a monitoring device. Each top tree node tn1-tn6 and each tree node n1,n2,n3,n4 is arranged to communicate whether or not an animal is trapped and/or registered by the node. Figure 3 discloses a monitoring device that has detected an insect 31, which is reported via the wireless data communication unit nc to the gateway via the pest control system. In Figures 4a a rat has been detected as it moves towards the bait 42. The detected rat is reported via the wireless data communication unit nc to the gateway via the pest control system. In Figure 4b, the trap door 43 is closed and the rat is , which is also reported via the wireless data communication unit nc to the gateway via the pest control system.

Each top tree node tn1-tn6 and each tree node n1, n2, n3, n4 is further a range extender and each top tree node tn1-tn6 and each tree node n1,n2,n3,n4 further comprises an address to its parent and a sub node database with addresses to all its direct children saved in the node memory. As disclosed in Figures 2, 3, 4a and 4b the nodes tn1-tn6,n1-n3 and the gateway 6 all comprises batteries 9 as power source or in the case of the gateway, as backup power source.

The nodes tn1-tn6,n1-n3 in the pest control system are arranged in as small trees t1-t7 as possible and as many trees t1-t6 as possible. In Figure 1 all devices that are in range of the gateway is a top tree node tn1-tn6 and tn1, tn2, tn4, and tn6 are alone in their respective tree. The nodes n1-n4 are not in range of the gateway and are therefore arranged to communicate via the top tree nodes tn3 and tn5. The tree t5 contains three levels of nodes where the nodes n3 and n4 communicate with the node n2 as they are out of range from the top node tn5 in the tree t5. Thus the communication paths are reduced to a minimum which will reduce the energy consumption of the nodes increasing battery life time and reducing the risk for animals suffering in powerless traps will decrease. Intervals between battery exchange are also be longer reducing costs for managing the pest control system.

Figure 1 further discloses how the gateway 2 is arranged to communicate with a backend server 6. A mobile computing device 7 can be used to access the backend server 6 so as to monitor and control the pest control system.

The gateway memory 21 further comprises an encryption module 25 and a decryption module 26 for enabling safe communication with the nodes tn1-tn6, n1-n4. In other examples, the encoder and/or decoder may form separate parts to the gateway memory 21. The gateway further comprises a control unit 24. The control unit 24 is configured to handle control signals, such as processor control signals. The control unit 24 comprises circuitry for executing computer instructions. The control unit 24 is further configured to execute the method steps of the present disclosure related to the gateway .

The control unit 24 is connected to the gateway memory 21, the external network communication unit 23 an the wireless data communication unit 22.

Each node tn1-tn6, n1-n4 also comprises a node memory nm. The node memory may be a non-volatile memory. The node memory nm stores the address to its parent node or gateway and addresses to all its children.

The node memory nm further comprises an encryption module 45 and a decryption module 46 for enabling safe communication with the gateway 2 or other nodes tn1-tn6, n1-n4. The node further comprise a control unit np. The control unit is connected to the node memory and the wireless communication module.

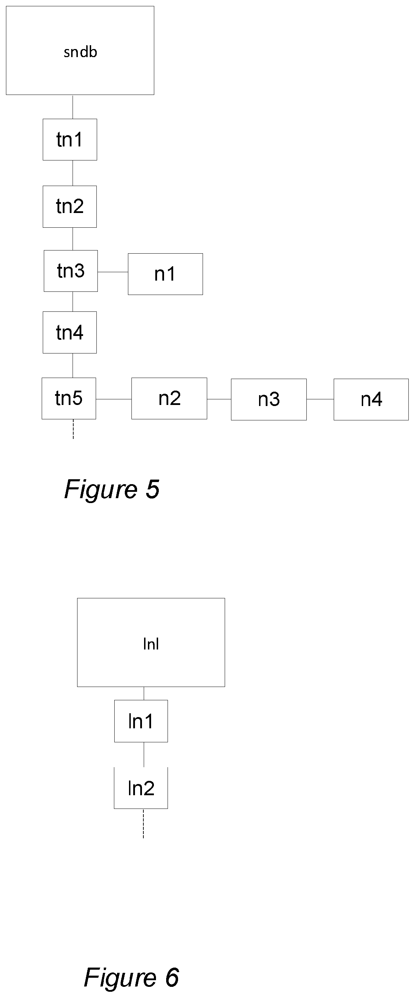

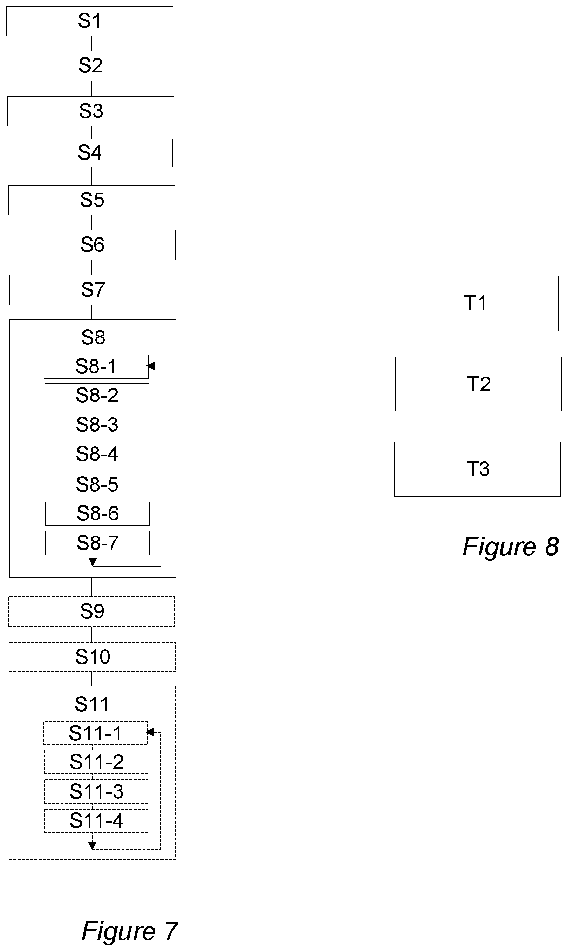

With reference to Figure 7 the second aspect of this disclosure shows a method for building a network of pest control devices, the method comprising arranging S1 a gateway 6, and a plurality of trap devices 3 and monitoring devices 4 in an area for pest control purposes,. As disclosed in Figures 2, 3, 4a and 4b the gateway 2 and each trap device 3 and monitoring device 4 comprises a memory with a sub node database sndb. An example of a sub node database sndb of the devices disclosed in Figure 1 is illustrated in Figure 5. The gateway and each trap device 3 and monitoring device 4 are turned on and the gateway 2 is sending S2 a pairing signal at a rendezvous frequency. Each trap device 3 or monitoring device 4 that is receiving the pairing signal performs the following steps: assigning S3 the trap device 3 or monitoring device 4 as top tree node tn1-tn6 in a tree t1-t6, storing S4 the assignments in the sub node database of the gateway sndb, and storing S5 the address of the gateway in the memory nm of the assigned trap device 3 or monitoring device 4. The gateway then broadcasts S6 on the rendezvous frequency to the newly assigned top tree nodes tn1-tn6 a network communication frequency for further future communication. The gateway then broadcasts S7 on the network communication frequency to the top tree nodes tn1-tn6 individual dedicated slot times during a repeat cycle so that the trees t1-t6 will avoid interference between them when operating in the network. When top tree nodes tn1-tn6 are assigned the following steps are repeated S8 until no additional trap device 3 or monitoring device 4 is responding and is added to the network: at each trap device 3 or monitoring device 4 with an empty sub node database, sending S8-1 at the rendezvous frequency the pairing signal during the dedicated slot time of the tree t1-t6; at each trap device 3 or monitoring device 4 that is receiving the pairing signal and that does not have a stored parent address stored: receiving S8-2 on the rendezvous frequency information about frequency of the network communication frequency; receiving S8-3 at the network communication frequency tree individual dedicated slot times during a repeat cycle; assigning S8-4 the trap device 3 or monitoring device 4 as tree node n1-n3 in the tree t1-t6 of the top tree node tn1-tn6; storing S8-5 the network address of the trap device 3 or monitoring device 4 sending the pairing signal as parent address; assigning S8-6 a node network address to the trap device 3 or monitoring device 4; communicating S8-7 on the network communication frequency the assigned node network address to the tree t1-t6. The network address is indicative of which tree t1-t6 it belongs to and what tree level it is located at.

A network of pest control devices is thereby built with as small trees t1-t6 as possible and as many trees as possible. All devices in range of the gateway will be assigned a top tree node. Only if a device is not in range of the gateway, will a tree be extended with tree nodes n1-n4. Communication paths will thereby be reduced to a minimum which will reduce the energy consumption of the nodes. The battery of battery driven trap devices and monitoring devices will thereby last longer and the risk for animals suffering in powerless traps will decrease. Intervals between battery exchange will also be longer reducing costs for managing the pest control system.

With further reference to Figures 6 and 7 the method further comprises a method to handle lost nodes. At the gateway 2: detecting S9 that one or a plurality of nodes tn1-tn6,n1-n3 in the network is not responding; adding S10 the identity of any missing nodes In1,In2 to a lost node list Inl; repeating S11 for each node In1,In2 in the lost node list: iterating S11-1 through the network level by level away from the top tree node level until the currently searched node is found: sending S11-2 at the network communication frequency a pairing signal during the trees dedicated slot time; if receiving a response assigning S11-3 the trap device 3 or monitoring device 4 a new network address and removing S11-4 the trap device 3 or monitoring device 4 from the lost node list. A broken device or a device that for some reason does not access its parent node will thereby be handled by setting up the part of the network no longer connected again. Sub-nodes to the broken node may thereby be connected to a different tree instead if within range of any node in the network. This will produce a very resilient network that repairs itself automatically as much as is possible if problems arise. It will in turn reduce the risk of animals being trapped in a trap device that is not connected to the network reducing the risk for animals suffering undetected.

The method further comprises setting S12 the gateway in a battery mode in which the gateway enters a sleep mode when not required to communicate according to repeat cycle schedules.

With reference to Figure 8, the third aspect of this disclosure shows a method of controlling the signal strength of a pest control network according to the first aspect, comprising setting T1 the first aspect the signal strength of the gateway 2 and all trap devices 3 or monitoring devices 4 of the pest control network to a first signal strength when arranging a new trap device 3 or monitoring device 4 at the location for pest control, wherein a new trap device 3 or monitoring device 4 is placed so as to receive a signal from the network; setting T2 the signal strength of the gateway 2 and all trap devices 3 or monitoring devices 4 of the pest control network to a second signal strength, stronger than the first signal strength, when building the network according to the second aspect; setting T3 the signal strength of the gateway 2 and all trap devices 3 or monitoring devices 4 of the pest control network to a third signal strength, stronger than the second signal strength, when operating the pest control network for pest control. This will produce an more robust network with reduced risk of malfunction due to lost data packets. As the system is set placed using reduced signal strength, the buildup of the network at a higher signal strength will have a strong signal for communicating. By then further increase the signal strength when operating the network for pest control, the risk of communication being lost due to bad reception is minimized or eliminated. This will in turn reduce the risk of animals being trapped in a trap device that is not connected to the network reducing the risk for animals suffering undetected.

The person skilled in the art realizes that the present disclosure is not limited to the preferred embodiments described above. The person skilled in the art further realizes that modifications and variations are possible, the protection scope is solely defined by the appended claims. For example, a person skilled in the art understands that the network 5 may be the internet accessed via data access through a mobile telephone network. However, the connection to the network 5 could also be via hard wire at least partly. It is also understood that the nodes tn1-tn6, n1-n4 could be other types of pest control devices than the ones used as examples in the Figures. Additionally, variations to the disclosed embodiments can be understood and effected by the skilled person, the invention is solely defined by the appended claims.

## Claims

1. A method for building a network of pest control devices, the method comprising
arranging (S1) a gateway (6), and a plurality of trap devices (3) and monitoring devices (4) in an area for pest control purposes, wherein the gateway and each trap device (3) and monitoring device (4) comprises a memory with a sub node database and wherein the gateway and each trap device (3) and monitoring device (4) are turned on;
sending (S2) a pairing signal from the gateway at a rendezvous frequency;
for each trap device (3) or monitoring device (4) that is receiving the pairing signal:
assigning (S3) the trap device (3) or monitoring device (4) as top tree node (tn1-tn6) in a tree (t1-t6),
storing (S4) the assignments in the sub node database of the gateway (sndb), and
storing (S5) the address of the gateway in the memory (nm) of the assigned trap device (3) or monitoring device (4);
at the gateway, broadcasting (S6) on the rendezvous frequency to the top tree nodes (tn1-tn6) a network communication frequency;
at the gateway, broadcasting (S7) on the network communication frequency to the top tree nodes (tn1-tn6), individual dedicated slot times during a repeat cycle, wherein the individual dedicated slot times during a repeat cycle are used to avoid interference between different trees; and
repeating (S8) until no additional trap device (3) or monitoring device (4) is responding and is added to the network:
at each trap device (3) or monitoring device (4) with an empty sub node database, sending (S8-1) at the rendezvous frequency the pairing signal during the dedicated slot time of the tree (t1-t6), wherein each top tree node (tn1-tn6) and each tree node (n1, n2, n3, n4) comprises an address to its parent and a sub node database with addresses to all its direct children saved in the node memory;
at each trap device (3) or monitoring device (4) that is receiving the pairing signal and that does not have a stored parent address stored:
receiving (S8-2) on the rendezvous frequency information about frequency of the network communication frequency;
receiving (S8-3) at the network communication frequency tree individual dedicated slot times during a repeat cycle;
assigning (S8-4) the trap device (3) or monitoring device (4) as tree node (n1-n3) in the tree (t1-t6) of the top tree node (tn1-tn6);
storing (S8-5) the network address of the trap device (3) or monitoring device (4) sending the pairing signal as parent address;
assigning (S8-6) a node network address to the trap device (3) or monitoring device (4);
communicating (S8-7) on the network communication frequency the assigned node network address to the tree (t1-t6), wherein the network address is indicative of which tree (t1-t6) it belongs to and what tree level it is located at;
wherein each top tree node (tn1-tn6) and each tree node (n1, n2, n3, n4) is a range extender and wherein one or a plurality of any of the top tree nodes (tn1-tn6) or the tree nodes (n1-n3) comprise(s) a battery (9) as power source.

2. The method for building a network of pest control devices according to claim 1, further comprising:
at the gateway (2):
detecting (S9) that one or a plurality of node(s) (tn1-tn6, n1-n3) in the network is not responding;
adding (S10) the identity of any missing nodes (In1, In2) to a lost node list (Inl);
repeating (S11) for each node (In1, In2) in the lost node list:
iterating (S11-1) through the network level by level away from the top tree node level until the currently searched node is found:
sending (S11-2) at the network communication frequency a pairing signal during the trees dedicated slot time;
if receiving a response assigning (S11-3) the trap device (3) or monitoring device (4) a new network address and removing (S11-4) the trap device (3) or monitoring device (4) from the lost node list.

3. The method of any one of claims 1-2, further comprising
setting (S12) the gateway in a battery mode in which the gateway enters a sleep mode when not required to communicate according to repeat cycle schedules.

4. The method according to any one of the preceding claims , wherein each top tree node
(tn1-tn6) and each tree node is a trap device (3) for an animal, a monitoring device (4), or both a trap and a monitoring device (4).

5. The method according to any one of the preceding claims,
wherein each top tree node (tn1-tn6) and each tree node (n1, n2, n3, n4) is arranged to communicate whether or not an animal is trapped and/or registered by the node.

6. The method according to any one of the preceding claims,
wherein the nodes (tn1-tn6, n1-n3) in the pest control system are arranged in as small trees (t1-t7) as possible and as many trees (t1-t6) as possible.

7. The method according to any one of the preceding claims,
wherein the gateway (2) is arranged to communicate with a backend server (6).

8. The method according to any one of the preceding claims,
wherein the gateway (6) comprises a battery (9) as power source.

9. The method according to any one of the preceding claims,
wherein all network traffic is encrypted.

10. The method according to any one of the preceding claims, further comprising
setting (T1) the signal strength of the gateway (2) and all trap devices (3) or monitoring devices (4) of the pest control network to a first signal strength when arranging a new trap device (3) or monitoring device (4) at the location for pest control, wherein a new trap device (3) or monitoring device (4) is placed so as to receive a signal from the network;
setting (T2) the signal strength of the gateway (2) and all trap devices (3) or monitoring devices (4) of the pest control network to a second signal strength, stronger than the first signal strength, when building the network according to any one of claims 10-13;
setting (T3) the signal strength of the gateway (2) and all trap devices (3) or monitoring devices (4) of the pest control network to a third signal strength, stronger than the second signal strength, when operating the pest control network for pest control.

## Patentansprüche

1. Verfahren zum Herstellen eines Netzwerks aus Schädlingsbekämpfungsvorrichtungen, wobei das Verfahren Folgendes umfasst:
Anordnen (S1) eines Gateways (6) und einer Vielzahl von Fallenvorrichtungen (3) und Überwachungsvorrichtungen (4) in einer Zone zu Schädlingsbekämpfungszwecken, wobei das Gateway und jede Fallenvorrichtung (3) und Überwachungsvorrichtung (4) einen Speicher mit einer Teilknotendatenbank umfassen und wobei das Gateway und jede Fallenvorrichtung (3) und Überwachungsvorrichtung (4) eingeschaltet sind;
Senden (S2) eines Kopplungssignals von dem Gateway bei einer Rendezvousfrequenz;
für jede Fallenvorrichtung (3) oder Überwachungsvorrichtung (4), die das Kopplungssignal empfängt:
Zuweisen (S3) der Fallenvorrichtung (3) oder Überwachungsvorrichtung (4) als Wurzelknoten (tn1-tn6) in einem Baum (t1-t6),
Speichern (S4) der Zuweisungen in der Teilknotendatenbank des Gateways (snbd) und
Speichern (S5) der Adresse des Gateways in dem Speicher (nm) der zugewiesenen Fallenvorrichtung (3) oder Überwachungsvorrichtung (4);
an dem Gateway, Rundrufen (S6), auf der Rendezvousfrequenz an die Wurzelknoten (tn1-tn6), einer Netzwerkkommunikationsfrequenz;
an dem Gateway, Rundrufen (S7), auf der Netzwerkkommunikationsfrequenz an die Wurzelknoten (tn1-tn6), einzelner dedizierter Schlitzzeiten während eines Wiederholungszyklus, wobei die einzelnen dedizierten Schlitzzeiten während eines Wiederholungszyklus dazu verwendet werden, eine Interferenz zwischen unterschiedlichen Bäumen zu vermeiden; und
Wiederholen (S8), bis keine zusätzliche Fallenvorrichtung (3) oder Überwachungsvorrichtung (4) reagiert und zu dem Netzwerk hinzugefügt wird, von Folgendem:
an jeder Fallenvorrichtung (3) oder Überwachungsvorrichtung (4) mit einer leeren Teilknotendatenbank, Senden (S8-1), bei der Rendezvousfrequenz, des Kopplungssignals während der dedizierten Schlitzzeit des Baumes (t1-t6), wobei jeder Wurzelknoten (tn1-tn6) und jeder Baumknoten (n1, n2, n3, n4) eine Adresse zu seinem Elternteil und eine Teilknotendatenbank mit Adressen zu allen seinen unmittelbaren Kindern umfasst, die in dem Knotenspeicher gespeichert ist;
an jeder Fallenvorrichtung (3) oder Überwachungsvorrichtung (4), die das Kopplungssignal empfängt und die keine gespeicherte Elternadresse gespeichert hat:
Empfangen (S8-2), auf der Rendezvousfrequenz, von Informationen über eine Frequenz der Netzwerkkommunikationsfrequenz;
Empfangen (S8-3), bei der Netzwerkkommunikationsfrequenz, einzelner baumdedizierter Schlitzzeiten während eines Wiederholungszyklus;
Zuweisen (S8-4) der Fallenvorrichtung (3) oder Überwachungsvorrichtung (4) als Baumknoten (n1-n3) in dem Baum (t1-t6) des Wurzelknotens (tn1-tn6);
Speichern (S8-5) der Netzwerkadresse der Fallenvorrichtung (3) oder Überwachungsvorrichtung (4), die das Kopplungssignal sendet, als Elternadresse;
Zuweisen (S8-6) einer Knotennetzwerkadresse zu der Fallenvorrichtung (3) oder Überwachungsvorrichtung (4);
Kommunizieren (S8-7), auf der Netzwerkkommunikationsfrequenz, der zugewiesenen Knotennetzwerkadresse an den Baum (t1-t6), wobei die Netzwerkadresse angibt, zu welchem Baum (t1-t6) sie gehört und auf welcher Baumebene sie sich befindet;
wobei jeder Wurzelknoten (tn1-tn6) und jeder Baumknoten (n1, n2, n3, n4) ein Bereichserweiterer ist und wobei einer oder eine Vielzahl beliebiger der Wurzelknoten (tn1-tn6) oder der Baumknoten (n1-n3) eine Batterie (9) als Leistungsquelle umfasst/umfassen.

2. Verfahren zum Herstellen eines Netzwerks aus Schädlingsbekämpfungsvorrichtungen nach Anspruch 1, ferner umfassend:
an dem Gateway (2):
Detektieren (S9), dass einer oder eine Vielzahl von Knoten (tn1-tn6, n1-n3) in dem Netzwerk nicht reagiert;
Hinzufügen (S10) der Identität beliebiger fehlender Knoten (In1, In2) zu einer Liste verlorener Knoten (Inl);
Wiederholen (S11), für jeden Knoten (In1, In2) in der Liste verlorener Knoten, von Folgendem:
Iterieren (S11-1), Ebene für Ebene durch das Netzwerk hindurch von der Wurzelknotenebene weg, bis der aktuell gesuchte Knoten gefunden wird, von Folgendem:
Senden (S11-2), bei der Netzwerkkommunikationsfrequenz, eines Kopplungssignals während der baumdedizierten Schlitzzeit;
falls eine Reaktion empfangen wird, Zuweisen (S11-3) einer neuen Netzwerkadresse zu der Fallenvorrichtung (3) oder Überwachungsvorrichtung (4) und Entfernen (S11-4) der Fallenvorrichtung (3) oder Überwachungsvorrichtung (4) aus der Liste verlorener Knoten.

3. Verfahren nach einem der Ansprüche 1-2, ferner umfassend:
Einstellen (S12) des Gateways in einen Batteriemodus, in dem das Gateway in einen Schlafmodus eintritt, wenn nicht erforderlich ist, dass es kommuniziert, gemäß Wiederholungszyklusschemata.

4. Verfahren nach einem der vorhergehenden Ansprüche, wobei jeder Wurzelknoten (tn1-tn6) und jeder Baumknoten eine Fallenvorrichtung (3) für ein Tier, eine Überwachungsvorrichtung (4) oder sowohl eine Fallen- als auch eine Überwachungsvorrichtung (4) ist.

5. Verfahren nach einem der vorhergehenden Ansprüche, wobei jeder Wurzelknoten (tn1-tn6) und jeder Baumknoten (n1, n2, n3, n4) dazu angeordnet ist, zu kommunizieren, ob ein Tier eingefangen und/oder durch den Knoten registriert wurde oder nicht.

6. Verfahren nach einem der vorhergehenden Ansprüche, wobei die Knoten (tn1-tn6, n1-n3) in dem Schädlingsbekämpfungssystem in möglichst kleinen Bäumen (t1-t7) und möglichst vielen Bäumen (t1-t6) angeordnet sind.

7. Verfahren nach einem der vorhergehenden Ansprüche, wobei das Gateway (2) dazu angeordnet ist, mit einem Backend-Server (6) zu kommunizieren.

8. Verfahren nach einem der vorhergehenden Ansprüche, wobei das Gateway (6) eine Batterie (9) als Leistungsquelle umfasst.

9. Verfahren nach einem der vorhergehenden Ansprüche, wobei aller Netzwerkverkehr verschlüsselt ist.

10. Verfahren nach einem der vorhergehenden Ansprüche, ferner umfassend:
Einstellen (T1) der Signalstärke des Gateways (2) und aller Fallenvorrichtungen (3) oder Überwachungsvorrichtungen (4) des Schädlingsbekämpfungsnetzwerks auf eine erste Signalstärke bei Anordnen einer neuen Fallenvorrichtung (3) oder Überwachungsvorrichtung (4) an dem Ort zur Schädlingsbekämpfung, wobei eine neue Fallenvorrichtung (3) oder Überwachungsvorrichtung (4) platziert wird, um ein Signal von dem Netzwerk zu empfangen;
Einstellen (T2) der Signalstärke des Gateways (2) und aller Fallenvorrichtungen (3) oder Überwachungsvorrichtungen (4) des Schädlingsbekämpfungsnetzwerks auf eine zweite Signalstärke, die stärker als die erste Signalstärke ist, bei dem Herstellen des Netzwerks nach einem der Ansprüche 10-13;
Einstellen (T3) der Signalstärke des Gateways (2) und aller Fallenvorrichtungen (3) oder Überwachungsvorrichtungen (4) des Schädlingsbekämpfungsnetzwerks auf eine dritte Signalstärke, die stärker als die zweite Signalstärke ist, bei Betreiben des Schädlingsbekämpfungsnetzwerks zur Schädlingsbekämpfung.

## Revendications

1. Procédé permettant de construire un réseau de dispositifs de lutte contre les nuisibles, le procédé comprenant les étapes consistant à :
agencer (S1) une passerelle (6), et une pluralité de dispositifs de piégeage (3) et de dispositifs de surveillance (4) dans une zone à des fins de lutte contre les nuisibles, dans lequel la passerelle et chaque dispositif de piégeage (3) et dispositif de surveillance (4) comprennent une mémoire avec une base de données de sous-nœuds, et dans lequel la passerelle et chaque dispositif de piégeage (3) et dispositif de surveillance (4) sont allumés ;
envoyer (S2) un signal d'appairage à partir de la passerelle à une fréquence de rendez-vous ;
pour chaque dispositif de piégeage (3) ou dispositif de surveillance (4) qui reçoit le signal d'appairage :
assigner (S3) le dispositif de piégeage (3) ou le dispositif de surveillance (4) en tant que nœud racine d'arborescence (tn1-tn6) dans une arborescence (t1-t6),
stocker (S4) les assignations dans la base de données de sous-nœuds de la passerelle (sndb), et
stocker (S5) l'adresse de la passerelle dans la mémoire (nm) du dispositif de piégeage (3) assigné ou du dispositif de surveillance (4) assigné ;
au niveau de la passerelle, diffuser (S6) sur la fréquence de rendez-vous vers les nœuds racines d'arborescence (tn1-tn6) une fréquence de communication réseau ;
au niveau de la passerelle, diffuser (S7) sur la fréquence de communication réseau vers les nœuds racines d'arborescence (tn1-tn6), des intervalles de temps individuels dédiés pendant un cycle de répétition, dans lequel les intervalles de temps individuels dédiés pendant un cycle de répétition sont utilisés pour éviter les interférences entre différentes arborescences ; et
répéter (S8) jusqu'à ce que plus aucun dispositif de piégeage (3) ou dispositif de surveillance (4) supplémentaire ne réponde et ne soit ajouté au réseau :
au niveau de chaque dispositif de piégeage (3) ou dispositif de surveillance (4) avec une base de données de sous-nœuds vide, envoyer (S8-1) à la fréquence de rendez-vous le signal d'appairage pendant l'intervalle de temps dédié de l'arborescence (t1-t6), dans lequel chaque nœud racine d'arborescence (tn1-tn6) et chaque nœud d'arborescence (n1, n2, n3, n4) comprennent une adresse vers son parent et une base de données de sous-nœuds avec des adresses vers tous ses nœuds enfants directs sauvegardées dans la mémoire de nœud ;
au niveau de chaque dispositif de piégeage (3) ou dispositif de surveillance (4) qui reçoit le signal d'appairage et qui ne possède pas d'adresse parente stockée :
recevoir (S8-2) sur la fréquence de rendezvous des informations concernant la valeur de la fréquence de communication réseau ;
recevoir (S8-3) à la fréquence de communication réseau des intervalles de temps individuels dédiés d'arborescence pendant un cycle de répétition ;
assigner (S8-4) le dispositif de piégeage (3) ou le dispositif de surveillance (4) en tant que nœud d'arborescence (n1-n3) dans l'arborescence (t1-t6) du nœud racine d'arborescence (tn1-tn6) ;
stocker (S8-5) l'adresse réseau du dispositif de piégeage (3) ou du dispositif de surveillance (4) envoyant le signal d'appairage en tant qu'adresse parente ; assigner (S8-6) une adresse réseau de nœud au dispositif de piégeage (3) ou au dispositif de surveillance (4) ;
communiquer (S8-7) sur la fréquence de communication réseau l'adresse réseau de nœud assignée à l'arborescence (t1-t6), dans lequel l'adresse réseau indique l'arborescence (t1-t6) à laquelle le nœud appartient et le niveau d'arborescence auquel il est situé ;
dans lequel chaque nœud racine d'arborescence (tn1-tn6) et chaque nœud d'arborescence (n1, n2, n3, n4) est un répéteur de portée et dans lequel un ou une pluralité de l'un quelconque des nœuds racines d'arborescence (tn1-tn6) ou des nœuds d'arborescence (n1-n3) comprend une batterie (9) en tant que source d'alimentation.

2. Procédé permettant de construire un réseau de dispositifs de lutte contre les nuisibles selon la revendication 1, comprenant en outre les étapes consistant à :
au niveau de la passerelle (2) :
détecter (S9) qu'un ou une pluralité de nœuds (tn1-tn6, n1-n3) dans le réseau ne répondent pas ;
ajouter (S10) l'identité de tout nœud manquant (ln1, ln2) à une liste de nœuds perdus (1nl) ;
répéter (S11) pour chaque nœud (ln1, ln2) dans la liste de nœuds perdus :
explorer itérativement (S11-1) le réseau niveau par niveau en s'éloignant du niveau du nœud racine d'arborescence jusqu'à ce que le nœud actuellement recherché soit trouvé :
envoyer (S11-2) à la fréquence de communication réseau un signal d'appairage pendant l'intervalle de temps dédié de l'arborescence ;
en cas de réception d'une réponse, assigner (S11-3) au dispositif de piégeage (3) ou au dispositif de surveillance (4) une nouvelle adresse réseau et retirer (S11-4) le dispositif de piégeage (3) ou le dispositif de surveillance (4) de la liste de nœuds perdus.

3. Procédé selon l'une quelconque des revendications 1 à 2, comprenant en outre l'étape consistant à :
régler (S12) la passerelle dans un mode sur batterie dans lequel la passerelle entre dans un mode veille lorsqu'elle n'est pas requise pour communiquer selon des planifications de cycles de répétition.

4. Procédé selon l'une quelconque des revendications précédentes, dans lequel chaque nœud racine d'arborescence (tn1-tn6) et chaque nœud d'arborescence est un dispositif de piégeage (3) pour un animal, un dispositif de surveillance (4), ou un dispositif à la fois de piégeage et de surveillance (4).

5. Procédé selon l'une quelconque des revendications précédentes, dans lequel chaque nœud racine d'arborescence (tn1-tn6) et chaque nœud d'arborescence (n1, n2, n3, n4) sont agencés pour communiquer si un animal est piégé et/ou enregistré par le nœud ou non.

6. Procédé selon l'une quelconque des revendications précédentes, dans lequel les nœuds (tn1-tn6, n1-n3) dans le système de lutte contre les nuisibles sont agencés dans des arborescences (t1-t7) les plus petites possibles et en un nombre d'arborescences (t1-t6) le plus grand possible.

7. Procédé selon l'une quelconque des revendications précédentes, dans lequel la passerelle (2) est agencée pour communiquer avec un serveur dorsal (6).

8. Procédé selon l'une quelconque des revendications précédentes, dans lequel la passerelle (6) comprend une batterie (9) en tant que source d'alimentation.

9. Procédé selon l'une quelconque des revendications précédentes, dans lequel l'intégralité du trafic réseau est chiffrée.

10. Procédé selon l'une quelconque des revendications précédentes, comprenant en outre les étapes consistant à :
régler (T1) l'intensité de signal de la passerelle (2) et de tous les dispositifs de piégeage (3) ou dispositifs de surveillance (4) du réseau de lutte contre les nuisibles sur une première intensité de signal lors de l'agencement d'un nouveau dispositif de piégeage (3) ou dispositif de surveillance (4) au niveau de l'emplacement pour la lutte contre les nuisibles, dans lequel un nouveau dispositif de piégeage (3) ou dispositif de surveillance (4) est placé de façon à recevoir un signal en provenance du réseau ;
régler (T2) l'intensité de signal de la passerelle (2) et de tous les dispositifs de piégeage (3) ou dispositifs de surveillance (4) du réseau de lutte contre les nuisibles sur une deuxième intensité de signal, plus forte que la première intensité de signal, lors de la construction du réseau selon l'une quelconque des revendications 10 à 13 ;
régler (T3) l'intensité de signal de la passerelle (2) et de tous les dispositifs de piégeage (3) ou dispositifs de surveillance (4) du réseau de lutte contre les nuisibles sur une troisième intensité de signal, plus forte que la deuxième intensité de signal, lors du fonctionnement du réseau de lutte contre les nuisibles pour la lutte contre les nuisibles.
